# EUROPEAN PATENT SPECIFICATION

(11) **EP 2 524 844 B1**
(45) Date of publication and mention of the grant of the patent: **26.08.2015**
(21) Application number: 11305618.8
(22) Date of filing: 20.05.2011
(51) Int. Cl.: B60S 1/08

(54) **Method and device to control power consumption in a windshield wiper unit**
Verfahren und Vorrichtung zur Steuerung des Stromverbrauchs in einer Scheibenwischereinheit
Procédé et dispositif pour contrôler la consommation électrique d'une unité d'essuie-glace

(43) Date of publication of application: 21.11.2012
(73) Proprietor: Valeo Systèmes d'Essuyage, 78321 Le Mesnil Saint Denis (FR)
(72) Inventor: Dias, Dominique, 78470 St. Remy les chevreuse (FR); Thebault, Denis, 92170 Vanves (FR); Villemin, Grégory, 78321 Le MesnilL Saint Denis (FR)
(74) Representative: Léveillé, Christophe

(56) References cited:
- EP-A1- 1 010 594
- US-A- 4 499 410
- US-A- 5 119 002
- US-A- 5 773 946
- US-B1- 6 703 804

## Description

The invention relates to a method and device to control power in a windshield wiper unit.

Document US 6 703 804 B1 disclsoes a method and device to control power consumption in a windshield wiper unit according to the preamble of claims 1 and 12.

To develop electrical vehicles with a larger autonomy, two aspects are relevant. On one hand the maximum battery load, and on the other hand the average power consumption of the vehicle.

In a normal vehicle the electrical consumption of the peripheral circuits such as radio, indoor ambiance or pictogram lights and windshield wiper unit is only moderately relevant since the running engine reloads the battery through an alternator. On the opposite, for the electrical vehicle, the slightest consumption reduction means more autonomy at same battery status.

The windscreen wiper units in use involve at least one electrical motor, setting wiper blades in motion when powered with current. When set in motion, the wiper blades wipe the surface of the windshield, in order to clean it from water or stain lowering the driver's vision.

On a dry windshield surface, the friction forces are more important, while wiping has become useless. This leads to increased power consumption, and faster blade wearing off if the driver forgets to stop the wiping or if it is unnecessarily switched on. It is therefore known to use a water droplet or water film detector, often based on an optical sensor, which is placed somewhere on the windshield surface.

Also, with increasing vehicle speed, the aerodynamic force of the air flow on the blades increases, which further increases the power consumption of the motors.

In order to overcome at least partially the aforementioned drawbacks by optimizing power consumption of a windshield wiper unit, the invention has for object a method to control power consumption in a windshield wiper unit, the windshield wiper unit comprising :
- wiper blades configured to wipe the windshield surface when set in motion,
- at least one motor configured to set the wiper blades in motion,
- a controller, configured to control the at least one motor according to a plurality of wiping modes,
the method comprising the steps :
- estimating or measuring the current consumption of the at least one motor,
- comparing the estimated or measured current consumption value to a predetermined threshold value,
- lowering the wiping speed of the blades in case the estimated or measured current consumption is greater than the threshold value,
   wherein the threshold value depends on the depletion level of a vehicle battery delivering the current.

This method allows to adapt the wiping speed in order to realize energy savings.

The method may have one or more of the following characteristics, taken separately or in combination.

The wiping speed is lowered by changing the wiping mode.

The wiping speed is lowered by lowering the instantaneous speed value during a wiping cycle.

The threshold value is the current consumption value at a predetermined wiping speed at a predefined vehicle speed.

The threshold value depends on the total current delivered by the vehicle battery. The current consumption is estimated or measured by estimating or measuring the instantaneous current value delivered to the at least one motor.

The current consumption is estimated or measured by averaging the instantaneous current value delivered to the at least one motor over at least one wiping cycle.

The method comprises the steps of :
- estimating or measuring the instantaneous current consumption,
- estimating or measuring an average current consumption value over at least one wiping cycle,
- comparing the instantaneous current consumption to a first threshold value determined according to the electric circuit components in the vehicle, in order to protect the electronics or the battery,
- comparing the average current consumption value to a second threshold value determined to allow battery load savings,
- lowering the wiping speed of the blades in case the estimated or measured current consumption is greater than the threshold value by changing the wiping mode.

It further comprises the steps :
- determining if the wiping speed is zero,
- triggering a stall alert and stop delivering current to the at least one motor if the wiping speed is zero.

The steps of estimating or measuring the current consumption of the at least one motor, comparing the estimated or measured current consumption value to a predetermined threshold value, and lowering the wiping speed of the blades in case the estimated or measured current consumption is greater than the threshold value are repeated in a loop.

The controller is connected to a rain sensor, and the method is initiated on rain detection by said rain sensor.

Also, the invention relates to the associated windshield wiper unit comprising :
- wiper blades configured to wipe the windshield surface when set in motion,
- at least one motor configured to set the wiper blades in motion,
- a controller, configured to control the at least one motor,
characterized in that the controller comprises means to estimate or measure the power consumption of the at least one motor, and in that the controller is configured to :
- estimate or measure the current consumption of the at least one motor,
- compare the estimated or measured current consumption value to a predetermined threshold value,
- lower the wiping speed of the blades in case the estimated or measured current consumption is greater than the threshold value, wherein the controller comprises means to estimate or measure the depletion level of the vehicle battery, and in that the controller is further configured to adapt the threshold value to the depletion level of the battery.

The windshield wiper unit can comprise one or more of the following characteristics, taken separately or in combination.

The controller comprises means to estimate or measure the total current delivered by the vehicle battery, and the controller is further configured to adapt the threshold value to the total current delivered by the vehicle battery.

Other characteristics and advantages will appear at the reading of the following description of the accompanying figures, among which :
- Figure 1 is a schematic view of a windshield wiping unit,
- Figure 2 is a schematic representation of a current estimator as used in the invention,
- Figure 3 is a simplified graph representing the power consumption as a function of the vehicle speed in different windshield wetness states,
- Figure 4 is a graph showing the power consumption over time of a wiper unit motor,
- Figure 5 is a schematic representation showing the operation mode of a wiper unit according to the invention, as a function of time and surrounding conditions,
- Figure 6 is a schematic representation showing the steps of a method according to the invention.

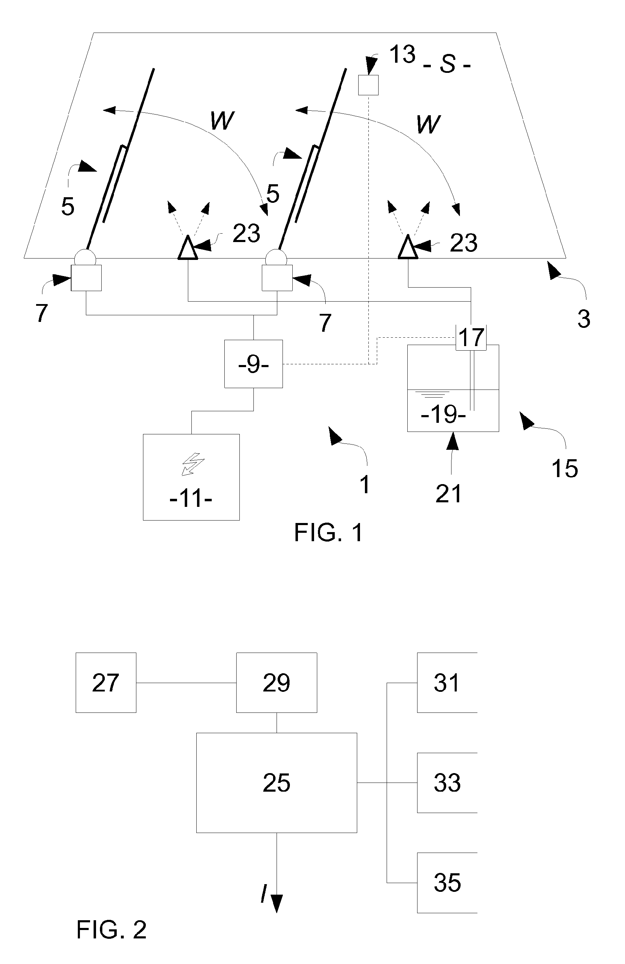

The invention relates to a vehicle windshield wiper unit, and more particularly to a method to manage power consumption in such a windshield wiper unit. Figure 1 represents schematically a windshield and the associated windshield wiper unit 1.

The windshield 3 comprises an external surface *S* which receives rain or other stain from the surroundings when the vehicle is driven. On said surface *S* are placed windshield wiper blades 5. The blades 5 are connected to respective motors 7, the motors 7 are able to set the blades 5 in motion by applying a torque at the base of the blades 5. Said motors 7 are fed with electrical power via a controller 9, configured to apply specific wiping programs by controlling the wiping speed *W* of blades 5. The power to run the motors 7 is delivered by the vehicle battery 11 or by an alternator.

The controller 9 can also be connected to a droplet detector 13. The droplet detector 13 is usually an optical sensor placed on the surface *S* using infrared dispersion and reflexion of infrared beams inside the windshield glass.

Also represented on figure 1 is a windshield washing unit 15. Said unit comprises a pump 17, connected to the controller 9, and configured to pump on driver request washing fluid 19 from a tank 21 to spraying nozzles 23. Said nozzles 23 direct a washing fluid spray on the windshield surface *S* to clear it from dust or stain.

The wiper unit 1 is usually controlled by the driver via a lever or any form of actuator in the passenger compartment, most often near the steering wheel, or on the dashboard. Several wiping speeds or programs are available : off *OFF*, single wipe *SW*, intermittent *INT*, low speed *LS* and high speed *HS*. Other programs may be foreseen without difficulty. It is clear that each mode has a particular power consumption, from lowest to highest, they are ordered as follows : OFF, SW, INT, LS, HS.

To control the speed of the wiping blades 5, the controller controls the current delivered to the motors 7 at constant voltage value. To limit the current, the controller can use pulse width modulation. Lowering speed *W* as used herein is either switching to a lower operating mode, or decreasing the instantaneous wiping speed value within a wiping cycle.

When the current is still high in INT mode, the controller 9 may stop the wipers.

However, the power consumption also depends on one hand on the wet/dry state of the windshield surface *S*, and on the other hand on the vehicle speed *V*. Indeed, the friction torque of the blade on surface also greatly depends on the wetness state of the windshield surface *S*. In particular, it is significantly lower when surface *S* is wet.

To said surface friction torque has to be added an aerodynamic friction torque, due to the air friction caused by the vehicle movement. This aerodynamic torque increases with vehicle speed *V*. As a consequence, the power consumption of the motors 7 will increase with the vehicle speed *V* at equal wiping speed *W*.

Figure 2 shows a particular embodiment of the current estimator 25 used in the present embodiments to estimate current *I*. The current estimator 25 is connected to a blade position sensor 27, measuring the blade 5 angular position via an angular motor speed estimator 29. Said angular motor speed estimator 29 uses the output of said blade position sensor 27 to estimate, for example via derivation the angular speed of the motor 7.

The current estimator 25 also receives from electronics 31 the pulse width modulation PWM value determined in previous steps, the battery voltage from a battery voltmeter 33 and the estimated motor temperature from a motor thermometer 35.

As an alternative, the current *I* can be directly measured using a current sensor.

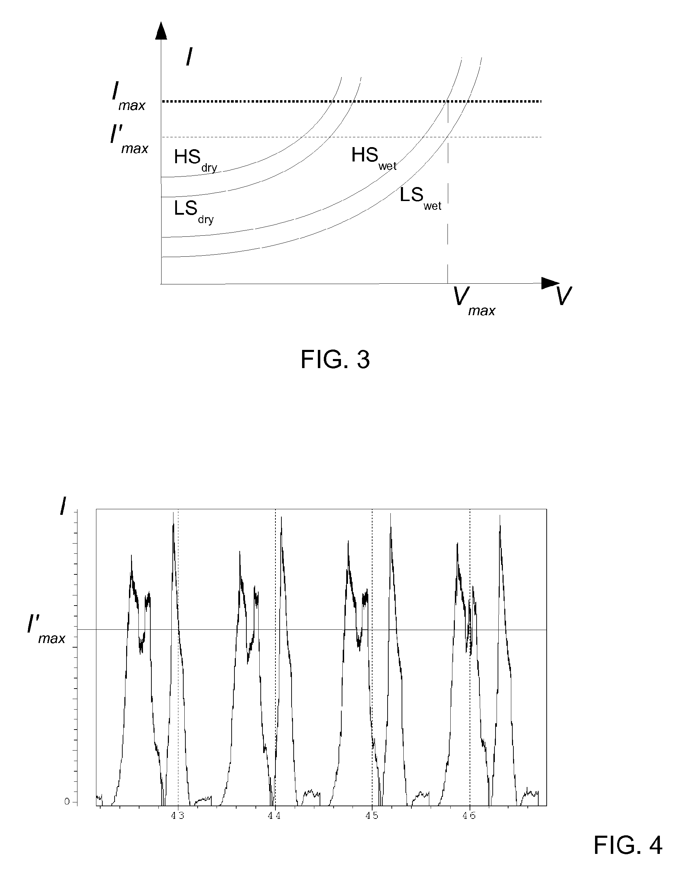

The current *I* consumption of motors 7 as a function of vehicle speed *V* at different wiping speeds *W* is represented on figure 3. In the example the motors are fed at constant voltage with a different current to adapt their mean power consumption, for example using pulse width modulation, so that the mean current *I* used as ordinate is directly proportional to the mean power consumption of motors 7.

On figure 3 are represented four curves. The two highest current curves, *HS_{dry}* and *LS_{dry}* correspond to the mean current consumption on dry windshield surface *S*, respectively at high wiping speed and low wiping speed.

The two lowest current curves, *HS_{wet}* and *LS_{wet}* correspond to the mean current consumption on wet windshield surface *S*, respectively at high wiping speed and low wiping speed.

The current curves at low wiping speed *LS* are in both surface wetness states lower than their corresponding current curves at high speed *HS.* The current curves on wet windshield surface *S*, *HS_{wet}* and *LS_{wet},* are much lower than the two current curves on dry windshield surface *S, HS_{dry}* and *LS_{dry}.*

This allows to define a particular current value, *Iₘₐₓ*, corresponding to the value of *HS_{wet}* at maximum vehicle speed *Vₘₐₓ*. Any estimated or measured current value of a consumption higher than said *Iₘₐₓ* value indicates that the windshield surface *S* is dry, and that wiping speed *W* can consequently be lowered, be it in terms of instantaneous value, or in terms of mean value over a wiping cycle.

Alternatively another maximum current *I'ₘₐₓ* value can be taken, said value corresponding to the value of *LS_{wet}* at maximum vehicle speed *Vₘₐₓ*, or an even lower maximal value to ensure a degraded but still functional wiping of windshield surface *S* at high speed.

Of course, the maximal speed *Vₘₐₓ* can be chosen according either to the vehicle motor and construction conditioned highest attainable speed, or to the highest legally possible speed in the country the vehicle is driven.

Figure 4 shows the current consumption of motors 7 as a function of time during four wiping cycles. Maximum allowed current *I'ₘₐₓ* value is represented by a horizontal line. Part of the current curve is above said maximum current value *I'ₘₐₓ*, which means that the wiping speed *W* has to be reduced.

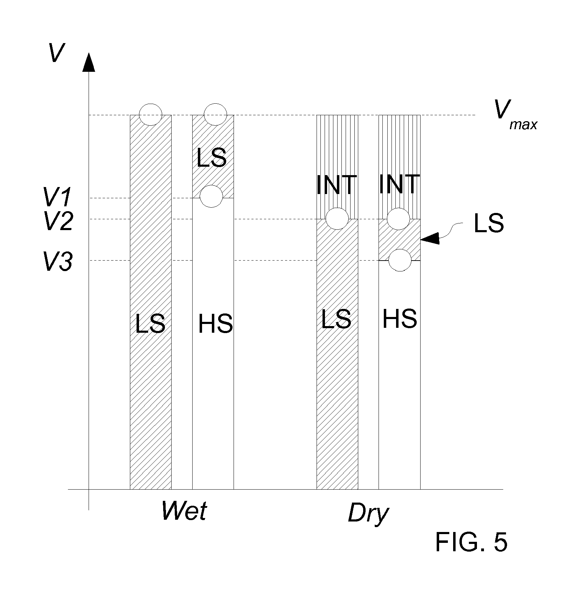

Figure 5 illustrates the example of a wiping speed management method according to the invention. On figure 5 are depicted the operation domains of the wiper unit 1 as a function of vehicle speed *V*. The vehicle speed *V* is represented along the vertical axis. The domains of the different operating modes *LS,* for low speed wiping, *HS,* for high speed wiping and *INT* for intermittent wiping are represented by vertical bar segments for the four following cases, from left to right:
- wet windshield surface *S*, starting at low speed wiping *LS,*
- wet windshield surface *S*, starting at high speed wiping *HS*,
- dry windshield surface *S*, starting at low speed wiping *LS*,
- dry windshield surface *S*, starting at high speed wiping *HS*.

Circles mark the points where the current in motors 7 reaches maximal value, here *I'ₘₐₓ* (current value for wet surface *S*, low speed *LS* wiping and maximum vehicle speed vehicle speed *Vₘₐₓ*), and where the controller 9 consequently reduces the wiping speed *W* to optimize current consumption.

If considering a vehicle starting an acceleration from a stop position to reach maximum speed, the operation point of the wiper unit starts at bottom of one of the columns formed by the bar segments according to the starting conditions, and goes up vertically, the operation mode (*LS, HS, INT*) changing when the operation point passes from one operation domain to another.

For example, the vehicle starts acceleration with a wet windshield surface *S*, at low speed wiping *LS*, corresponding to the leftmost column. The choice of *I'ₘₐₓ* makes that on whole acceleration the wiper unit 1 remains in *LS* mode, until at maximum speed *Vₘₐₓ* current value *I'ₘₐₓ* is reached.

The vehicle starts now with a wet windshield surface *S*, at high speed wiping *HS*, corresponding to the second column from the left. As the vehicle accelerates, the aerodynamic torque increases, consequently the current consumption *I* increases too. At a certain speed *V*₁, the current reaches *I'ₘₐₓ*, consequently the controller switches operation mode to *LS* to reduce current consumption. The choice of *I'ₘₐₓ* makes that on the rest of the acceleration the wiper unit 1 remains in *LS* mode, until at maximum speed *Vₘₐₓ* current value *I'ₘₐₓ* is reached.

The vehicle starts now with a dry windshield surface *S*, at low speed wiping *LS*, corresponding to the second column from the right. As the vehicle accelerates, the aerodynamic torque increases, consequently the current consumption *I* increases too. At a certain speed *V*₂, the current reaches *I'ₘₐₓ*, consequently the controller switches operation mode to intermittent *INT* to reduce current consumption. Until reaching maximum speed *Vₘₐₓ*, the current remains under maximum value *I'ₘₐₓ*, so that no further change in operation mode is triggered.

The vehicle starts now with a dry windshield surface *S*, at high speed wiping *HS*, corresponding to the rightmost column. At a certain speed *V*₃, the current reaches *I'*_{*max*,} consequently the controller switches operation mode to low speed mode *LS* to reduce current consumption. Upon reaching the higher speed *V*₂, the current reaches *I'ₘₐₓ* again consequently the controller switches operation mode to intermittent *INT* to reduce once more the current consumption.

The method is also useful at constant vehicle speed *V* with changing wetness conditions, for example when rain stops, or when spraying for a short moment the windshield surface *S* with washing fluid 19. Such changes of conditions at constant speed correspond to horizontal displacements from one column to the other in figure 5.

For example,while at speed *V*, the driver had selected *HS* wiping mode because of an intense rain outburst. Said rain outburst being strong enough to maintain the windshield surface *S* in a sufficient wet state at said *HS* wiping mode. As the outburst passes, the amount of falling rain decreases, the blades 5 wiping at high speed dry up said surface *S*. The surface friction torque increases, *I* reaches *I'ₘₐₓ*, and consequently the controller 9 switches operation mode to low wiping speed *LS* to reduce current consumption.

To control wiping speed *W*, the controller can also use input from different vehicle elements. According to the invention, the controller receives information on the battery 11, and its load status. Information on important battery depletion, or decreasing battery voltage is used to lower selectively the maximum allowed current value *I'ₘₐₓ* in terms of averaged current consumption over at least one wiping cycle, to enhance autonomy.

For example in an electrical vehicle, when reaching a first depletion level (e. g. 50% off maximum battery load), the current limitation according to the method is initiated. When reaching a second depletion level (e. g. 20% off maximum battery load), the maximum current is set at a lower value, to increase the energy savings by forbidding further energy consuming wiping modes.

Advantageously, to preserve battery 11 load, the controller 9 will compute an average value <*I*>, possibly RMS value, over a certain integer number of cycles, and compare said average value <*I*> to a threshold mean value <*I*>*ₘₐₓ* to determine whether or not changing the wiping speed *W* is necessary.

This treatment of average current consumption can be done in parallel or as an alternative to the previously described use of directly estimated or measured instantaneous current consumption *I*. If used with computations on mean current values, the instantaneous current consumption *I* can be compared to a threshold value *I"ₘₐₓ* chosen according to the electric circuit components in the vehicle, in order to protect the electronics or the battery 11 itself. This allows to reduce the crest value of intensity, in order to avoid regular or long lasting strong current values.

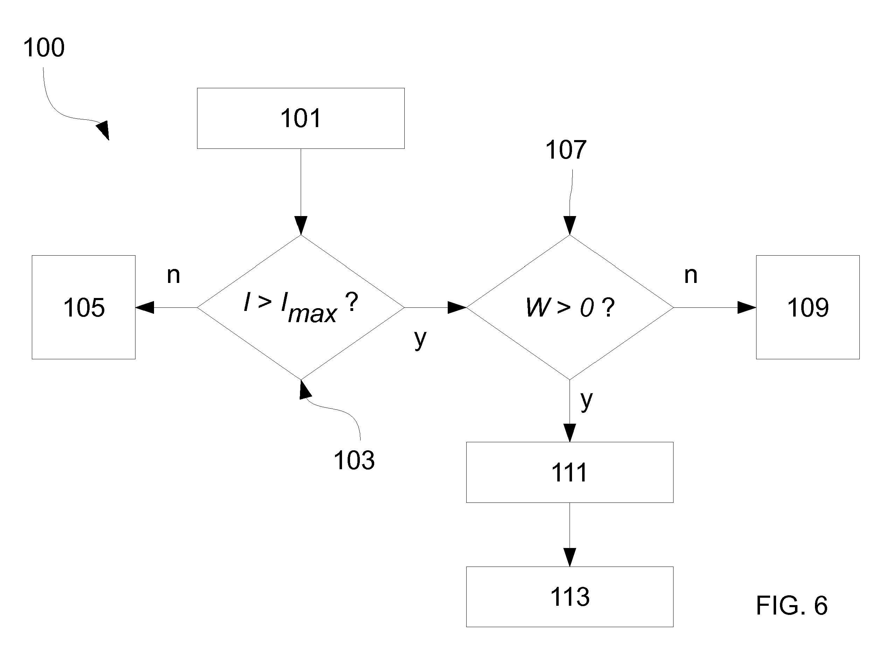

Figure 6 pictures the steps of an embodiment 100 of the method to manage power consumption in a wiper unit 1 that also takes in consideration the stall scenario. In the stall scenario, the blades 5 are mechanically blocked, for example by a layer of snow or ice. In said stall scenario, the current consumption quickly rises, while the wiping speed *W* remains zero.

In this embodiment, the motors 7 are supplied with a pulse width modulated current so that the relevant current value *I* is the mean delivered current value. The first step 101 of method 100 is estimating or measuring the current consumption, and computing a mean value over one cycle *I*.

Having the determined current consumption value *I*, the controller compares said value to maximum value *Iₘₐₓ* or *I'ₘₐₓ* in step 103. If the determined value *I* is smaller than the maximum value *Iₘₐₓ*, the controller maintains the current level at value *I* in step 105.

If the determined value *I* is greater than the maximum value *Iₘₐₓ*, the controller tests if the wiping speed *W* is equal to 0 in step 107. If the wiping speed is equal to 0, the wiping unit 1 is facing a stall scenario. Accordingly, the controller 9 will activate in step 109 a series of dispositions such as a stall alarm indicator, and stop delivering current to the motors 7 in step 109.

If the speed is greater than zero, the controller lowers the current consumption in step 111 by lowering the pulse width modulation PWM of the current delivered to the motor 7. In step 113, the controller 9 compares the lowered pulse modulation to the nominal value for the currently selected wiping mode (*INT*, *HS* or *LS*), and in case said lowered pulse modulation is significantly smaller than said nominal value, the controller 9 switches to a lower wiping mode.

The controller may then in any case wait for a certain time interval to elapse and return to step 101 to repeat the process in a loop.

In case the vehicle is equipped with a rain droplet 13 detector or rain sensor, said sensor 13 can be configured to initiate the method 100.

For example, the controller 9 can be connected to the rain sensor 13. When the rain sensor 13 detects a presence of water on the windshield surface *S*, it triggers the wiping and emits a starting instruction that initiates the method 100 by executing step 101.

The method allows a form of power automatic wiper management that ensures adaptation of the current consumption in the motors 7 of the windshield wiper unit 1. In particular, the method allows savings of approximately 30% of the wiper unit consumption. This relevant for the case of the electrical vehicle, where both motor and peripheral circuit are all fed by the battery 11.

Moreover, by setting a maximum value for the instantaneous current consumption, the method can avoid damaging the battery 11 and other electronic components by causing too important current values to be delivered.

Also, the method and accompanying hardware and software are largely compliant with the already existing architectures. In particular, the method forms a synergy with rain sensors by confirming the presence of water on surface *S* by means involving a large portion of said surface *S*.

## Claims

1. Method to control power consumption in a windshield wiper unit (1), the windshield wiper unit (1) comprising :
- wiper blades (5) configured to wipe the windshield surface (*S*) when set in motion,
- at least one motor (7) configured to set the wiper blades (5) in motion,
- a controller (9), configured to control the at least one motor (7) according to a plurality of wiping modes (*OFF, INT, HS, LS*),
the method comprising the steps :
- estimating or measuring the current consumption of the at least one motor (7),
- comparing the estimated or measured current consumption (*I*) value to a predetermined threshold value (*Iₘₐₓ*,*I'ₘₐₓ*),
- lowering the wiping speed (*W*) of the blades (5) in case the estimated or measured current consumption (*I*) is greater than said threshold value (*Iₘₐₓ*, *Iₘₐₓ*),
**characterized in that** the threshold value (*Iₘₐₓ, I'ₘₐₓ*) depends on the depletion level of a vehicle battery (11) delivering the current.

2. Method according to claim 1, **characterized in that** the wiping speed (*W*) is lowered by changing the wiping mode (*OFF, INT, HS, LS).*

3. Method according to claim 1, **characterized in that** the wiping speed (*W*) is lowered by lowering the instantaneous speed value during a wiping cycle.

4. Method according to any of the precedent claims, **characterized in that** the threshold value (*Iₘₐₓ, I'ₘₐₓ*) is the current consumption value at a predetermined wiping speed at a predefined vehicle speed *Vₘₐₓ*).

5. Method according to any of the precedent claims, **characterized in that** the threshold value (*Iₘₐₓ*, *I'ₘₐₓ*) depends on the total current delivered by the vehicle battery (11).

6. Method according to any of the precedent claims, **characterized in that** the current consumption is estimated or measured by estimating or measuring the instantaneous current value delivered to the at least one motor (7).

7. Method according to any of the precedent claims, **characterized in that** the current consumption is estimated or measured by averaging the instantaneous current value delivered to the at least one motor (7) over at least one wiping cycle.

8. Method according to any of the precedent claims, **characterized in that** it comprises the steps of :
- estimating or measuring the instantaneous current consumption (*I*),
- estimating or measuring an average current consumption value (<*I*>) over at least one wiping cycle,
- comparing the instantaneous current consumption to a first threshold value (*I"ₘₐₓ*) determined according to the electric circuit components in the vehicle, in order to protect the electronics or the battery (11),
- comparing the average current consumption value (<*I*>) to a second threshold value (<*I*>_{*ma*x}) determined to allow battery (11) load savings,
- lowering the wiping speed of the blades (5) in case the estimated or measured current consumption (*I*) is greater than the threshold value (*I"ₘₐₓ*, <*I*>*ₘₐₓ*).

9. Method according to any of precedent claims, **characterized in that** it further comprises the steps :
- determining if the wiping speed (*W*) is zero,
- triggering a stall alert and stop delivering current to the at least one motor (7) if the wiping speed (*W*) is zero.

10. Method according to any of the precedent claims, **characterized in that** the steps of estimating or measuring the current consumption of the at least one motor (7), comparing the estimated or measured current consumption (*I*) value to a predetermined threshold value (*Iₘₐₓ*, *I'ₘₐₓ*), and lowering the wiping speed of the blades (5) in case the estimated or measured current consumption (*I*) is greater than the threshold value (*Iₘₐₓ*, *I'ₘₐₓ*) are repeated in a loop.

11. Method according to any of the precedent claims, wherein the controller is connected to a rain sensor (13), and **characterized in that** the method is initiated on rain detection by said rain sensor (13).

12. Windshield wiper unit comprising :
- wiper blades (5) configured to wipe the windshield surface (S) when set in motion,
- at least one motor (7) configured to set the wiper blades (5) in motion,
- a controller (9), configured to control the at least one motor (5), **characterized in that** the controller (9) comprises means to estimate or measure the power consumption of the at least one motor (5),
and **in that** the controller (9) is configured to :
- estimate or measure the current consumption of the at least one motor (7),
- compare the estimated or measured current consumption (*I*) value to a predetermined threshold value (*Iₘₐₓ*, *I'ₘₐₓ*),
- lower the wiping speed of the blades (5) in case the estimated or measured current consumption (*I*) is greater than the threshold value (*Iₘₐₓ*, *I'ₘₐₓ*),
**characterized in that** the controller (9) comprises means to estimate or measure the depletion level of the vehicle battery (11), and **in that** the controller (9) is further configured to adapt the threshold value (*Iₘₐₓ*, *I'ₘₐₓ*) to the depletion level of the battery.

13. Windshield wiper unit according to claim 12, **characterized in that** the controller (9) comprises means to estimate or measure the total current delivered by the vehicle battery (11), and **in that** the controller (9) is further configured to adapt the threshold value (*Iₘₐₓ*, *I'ₘₐₓ*) to the total current delivered by the vehicle battery (11).

## Patentansprüche

1. Verfahren zur Steuerung des Stromverbrauchs in einer Scheibenwischereinheit (1), wobei die Scheibenwischereinheit (1) Folgendes umfasst:
- Wischerblätter (5), die ausgelegt sind, um die Windschutzscheibenoberfläche (*S*), wenn sie in Bewegung versetzt werden, abzuwischen,
- mindestens einen Motor (7), der ausgelegt ist, um die Wischerblätter (5) in Bewegung zu versetzen,
- eine Steuervorrichtung (9), die konfiguriert ist, um den mindestens einen Motor (7) gemäß mehreren Wischbetriebsarten (*OFF, INT, HS, LS*) zu steuern,
wobei das Verfahren die folgenden Schritte aufweist:
- Schätzen oder Messen des Stromverbrauchs des mindestens einen Motors (7),
- Vergleichen des geschätzten oder gemessenen Stromverbrauchswerts (*I*) mit einem vorbestimmten Schwellenwert (*Iₘₐₓ*, *I'ₘₐₓ*),
- Verringern der Wischgeschwindigkeit (*W*) der Wischerblätter (5), falls der geschätzte oder gemessene Stromverbrauch (*I*) größer ist als der Schwellenwert (*I*ₘₐₓ, *I'*ₘₐₓ),
**dadurch gekennzeichnet, dass** der Schwellenwert (*I*ₘₐₓ, *I'*ₘₐₓ) von dem Entladungsniveau der Fahrzeugbatterie (11), die den Strom liefert, abhängt.

2. Verfahren nach Anspruch 1, **dadurch gekennzeichnet, dass** die Wischgeschwindigkeit (*W*) durch Ändern der Wischbetriebsart (*OFF, INT, HS, LS*) verringert wird.

3. Verfahren nach Anspruch 1, **dadurch gekennzeichnet, dass** die Wischgeschwindigkeit (*W*) durch Verringern des Sofortgeschwindigkeitswerts während eines Wischzyklus verringert wird.

4. Verfahren nach einem der vorhergehenden Ansprüche, **dadurch gekennzeichnet, dass** der Schwellenwert (*I*ₘₐₓ, *I'*ₘₐₓ) der Stromverbrauchswert bei einer vorbestimmten Wischgeschwindigkeit bei einer vorbestimmten Fahrzeuggeschwindigkeit (*V*ₘₐₓ) ist.

5. Verfahren nach einem der vorhergehenden Ansprüche, **dadurch gekennzeichnet, dass** der Schwellenwert (*I*ₘₐₓ, *I'*ₘₐₓ) von dem Gesamtstrom abhängt, der von der Fahrzeugbatterie (11) geliefert wird.

6. Verfahren nach einem der vorhergehenden Ansprüche, **dadurch gekennzeichnet, dass** der Stromverbrauch durch Schätzen oder Messen des Sofortstromwerts, der zu dem mindestens einen Motor (7) geliefert wird, geschätzt oder gemessen wird.

7. Verfahren nach einem der vorhergehenden Ansprüche, **dadurch gekennzeichnet, dass** der Stromverbrauch durch Mitteln des Sofortstromwerts, der zu dem mindestens einen Motor (7) über mindestens einen Wischzyklus geliefert wird, geschätzt oder gemessen wird.

8. Verfahren nach einem der vorhergehenden Ansprüche, **dadurch gekennzeichnet, dass** es die folgenden Schritte aufweist:
- Schätzen oder Messen des Sofortstromverbrauchs (*I*),
- Schätzen oder Messen eines mittleren Stromverbrauchswerts (<*I*>) während mindestens eines Wischzyklus,
- Vergleichen des Sofortstromverbrauchs mit einem ersten Schwellenwert (*I"*ₘₐₓ), der gemäß den Stromschaltungskomponenten in dem Fahrzeug bestimmt wird, um die Elektronik oder die Batterie (11) zu schützen,
- Vergleichen des mittleren Stromverbrauchswerts (<*I*>) mit einem zweiten Schwellenwert (<*I*>ₘₐₓ), der bestimmt wird, um Ladungseinsparungen der Batterie (11) zu erlauben,
- Verringern der Wischgeschwindigkeit der Wischerblätter (5), falls der geschätzte oder der gemessene Stromverbrauch (*I*) größer ist als der Schwellenwert (*I*"ₘₐₓ, <*I*>ₘₐₓ).

9. Verfahren nach einem der vorhergehenden Ansprüche, **dadurch gekennzeichnet, dass** es ferner die folgenden Schritte aufweist:
- Bestimmen, ob die Wischgeschwindigkeit (*W*) null ist,
- Auslösen einer Blockierungswarnung und Stoppen des Zuführens von Strom zu dem mindestens einen Motor (7), wenn die Wischgeschwindigkeit (*W*) null ist.

10. Verfahren nach einem der vorhergehenden Ansprüche, **dadurch gekennzeichnet, dass** die Schritte des Schätzens oder Messens des Stromverbrauchs des mindestens einen Motors (7), des Vergleichens des geschätzten oder gemessenen Stromverbrauchswerts (*I*) mit einem vorbestimmten Schwellenwert (*I*ₘₐₓ, (*Iₘₐₓ*) und des Verringerns der Wischgeschwindigkeit der Wischerblätter (5), falls der geschätzte oder gemessene Stromverbrauch (*I*) größer ist als der Schwellenwert (*I*ₘₐₓ, *I'ₘₐₓ*), in einer Schleife wiederholt werden.

11. Verfahren nach einem der vorhergehenden Ansprüche, wobei die Steuervorrichtung mit einem Regensensor (13) verbunden ist, und **dadurch gekennzeichnet, dass** das Verfahren bei Regenerfassung durch den Regensensor (13) initiiert wird.

12. Scheibenwischereinheit, die Folgendes umfasst:
- Wischerblätter (5), die ausgelegt sind, um die Windschutzscheibenoberfläche (*S*), wenn sie in Bewegung versetzt werden, abzuwischen,
- mindestens einen Motor (7), der ausgelegt ist, um die Wischerblätter (5) in Bewegung zu versetzen,
- eine Steuervorrichtung (9), die konfiguriert ist, um den mindestens einen Motor (7) zu steuern,
**dadurch gekennzeichnet, dass** die Steuervorrichtung (9) Mittel umfasst, um den Stromverbrauch des mindestens einen Motors (7) zu schätzen oder zu messen,
und dass die Steuervorrichtung (9) konfiguriert ist, um:
- den Stromverbrauch des mindestens einen Motors (7) zu schätzen oder zu messen,
- den geschätzten oder gemessenen Stromverbrauchswert (*I*) mit einem vorbestimmten Schwellenwert (*I*ₘₐₓ, *I'*ₘₐₓ) zu vergleichen,
- die Wischgeschwindigkeit der Wischerblätter (5), falls der geschätzte oder gemessene Stromverbrauch (*I*) größer ist als der Schwellenwert (*I*ₘₐₓ, *I'*ₘₐₓ), zu verringern,
**dadurch gekennzeichnet, dass** die Steuervorrichtung (9) Mittel umfasst, um das Entladungsniveau der Fahrzeugbatterie (11) zu schätzen oder zu messen, und dass die Steuervorrichtung (9) ferner konfiguriert ist, um den Schwellenwert (*I*ₘₐₓ, *I*'ₘₐₓ) an das Entladungsniveau der Batterie anzupassen.

13. Scheibenwischereinheit nach Anspruch 12, **dadurch gekennzeichnet, dass** die Steuervorrichtung (9) Mittel zum Schätzen oder Messen des Gesamtstroms umfasst, der von der Fahrzeugbatterie (11) geliefert wird, und dass die Steuervorrichtung (9) ferner konfiguriert ist, um den Schwellenwert (*I*ₘₐₓ, *I*'ₘₐₓ) an den Gesamtstrom, der von der Fahrzeugbatterie (11) geliefert wird, anzupassen.

## Revendications

1. Procédé de contrôle de la consommation en énergie d'une unité d'essuie-glace (1), l'unité d'essuie-glace (1) comprenant :
des balais (5) d'essuie-glace configurés pour balayer la surface (S) du pare-brise lorsqu'ils sont mis en déplacement,
au moins un moteur (7) configuré pour mettre en déplacement les balais d'essuie-glace (5) et
un contrôleur (9) configuré pour commander le ou les moteurs (7) en un parmi plusieurs modes de balayage (*OFF, INT, HS, LS*),
le procédé comportant les étapes qui consistent à :
estimer ou mesurer la consommation en courant du ou des moteurs (7),
comparer la valeur estimée ou mesurée de consommation de courant (*I*) à une valeur de seuil prédéterminée (*Iₘₐₓ*, *I'ₘₐₓ*),
abaisser la vitesse de balayage (*W*) des balais (5) au cas où la consommation estimée ou mesurée de courant (*I*) est supérieure à ladite valeur de seuil (*Iₘₐₓ*, *I*'*ₘₐₓ*),
**caractérisé en ce que**
la valeur de seuil (*Iₘₐₓ, I'ₘₐₓ*) dépend du niveau d'épuisement de la batterie (11) du véhicule qui délivre le courant.

2. Procédé selon la revendication 1, **caractérisé en ce que** la vitesse de balayage (*W*) est abaissée en changeant le mode de balayage (*OFF, INT, HS, LS).*

3. Procédé selon la revendication 1, **caractérisé en ce que** la vitesse de balayage (*W*) est abaissée en abaissant la valeur de vitesse instantanée pendant un cycle de balayage.

4. Procédé selon l'une quelconque des revendications précédentes, **caractérisé en ce que** la valeur de seuil (*Iₘₐₓ*, *I'ₘₐₓ*) est la valeur de consommation du courant à une vitesse de balayage prédéterminée et à une vitesse prédéfinie (*Vₘₐₓ*) du véhicule.

5. Procédé selon l'une quelconque des revendications précédentes, **caractérisé en ce que** la valeur de seuil (*Iₘₐₓ*, *I'ₘₐₓ*) dépend du courant total délivré par la batterie (11) du véhicule.

6. Procédé selon l'une quelconque des revendications précédentes, **caractérisé en ce que** la consommation en courant est estimée ou mesurée en estimant ou en mesurant la valeur instantanée du courant délivré au moteur ou aux moteurs (7).

7. Procédé selon l'une quelconque des revendications précédentes, **caractérisé en ce que** la consommation en courant est estimée ou mesurée en formant la moyenne de la valeur instantanée du courant délivré au moteur ou aux moteurs (7) pendant au moins un cycle de balayage.

8. Procédé selon l'une quelconque des revendications précédentes, **caractérisé en ce qu'**il comprend les étapes qui consistent à :
estimer ou mesurer la consommation instantanée de courant (*I*),
estimer ou mesurer une valeur moyenne de la consommation en courant (<*I*>) sur au moins un cycle de balayage,
comparer la consommation instantanée du courant à une première valeur de seuil (*I"ₘₐₓ*) déterminée selon les composants du circuit électrique du véhicule de manière à protéger l'électronique ou la batterie (11),
comparer la valeur moyenne (<*I*>) de consommation de courant à une deuxième valeur de seuil (<*I*>*ₘₐₓ*) déterminée de manière à permettre une économie de charge de la batterie (11) et
abaisser la vitesse de balayage des balais (5) au cas où la consommation estimée ou mesurée en courant (*I*) est supérieure à la valeur de seuil (*I"ₘₐₓ*, <*I*>*ₘₐₓ*).

9. Procédé selon l'une quelconque des revendications précédentes, **caractérisé en ce qu'**il comprend en outre les étapes qui consistent à :
déterminer si la vitesse de balayage (*W*) est nulle et
lancer une alerte et arrêter de fournir du courant au moteur ou aux moteurs (7) lorsque la vitesse de balayage (*W*) est zéro.

10. Procédé selon l'une quelconque des revendications précédentes, **caractérisé en ce que** les étapes d'estimation ou de mesure de la consommation en courant du ou des moteurs (7), de comparaison de la valeur estimée ou mesurée (*I*) de consommation de courant à une valeur de seuil prédéterminée (*Iₘₐₓ*, *I'ₘₐₓ*) et d'abaissement de la vitesse de balayage des balais (5) au cas où la consommation estimée ou mesurée en courant (*I*) est supérieure à la valeur de seuil (*Iₘₐₓ*, *I'ₘₐₓ*) sont répétées en boucle.

11. Procédé selon l'une quelconque des revendications précédentes, dans lequel le contrôleur est raccordé à un détecteur de pluie (13) et **caractérisé en ce que** le procédé est lancé lorsque ledit détecteur de pluie (13) détecte la présence de pluie.

12. Unité d'essuie-glace comprenant :
des balais (5) d'essuie-glace configurés pour balayer la surface (S) du pare-brise lorsqu'ils sont mis en déplacement,
au moins un moteur (7) configuré pour mettre les balais d'essuie-glace (5) en déplacement et
un contrôleur (9) configuré pour contrôler le ou les moteurs (7),
**caractérisée en ce que**
le contrôleur (9) comprend des moyens permettant d'estimer ou de mesurer la consommation en énergie du ou des moteurs (7) et
**en ce que** le contrôleur (9) est configuré pour
estimer ou mesurer la consommation en courant du ou des moteurs (7),
comparer la valeur estimée ou mesurée de consommation de courant (*I*) à une valeur de seuil prédéterminée (*Iₘₐₓ*, *I*'*ₘₐₓ*),
abaisser la vitesse de balayage des balais (5) au cas où la consommation estimée ou mesurée de courant (*I*) est supérieure à la valeur de seuil (*Iₘₐₓ*, *I*'*ₘₐₓ*),
le contrôleur (9) comprenant des moyens pour estimer ou mesurer le niveau d'épuisement de la batterie (11) du véhicule et le contrôleur (9) étant en outre configuré pour adapter la valeur de seuil (*Iₘₐₓ*, *I*'*ₘₐₓ*) au niveau d'épuisement de la batterie.

13. Unité d'essuie-glace selon la revendication 12, caractérisée le contrôleur (9) comprend des moyens permettant d'estimer ou de mesurer le courant total délivré par la batterie (11) du véhicule et en ce que le contrôleur (9) est en outre configuré pour adapter la valeur de seuil (*Iₘₐₓ*, *I*'*ₘₐₓ*) au courant total délivré par la batterie (11) du véhicule.
